Europäisches Patentamt

European Patent Office

Office européen des brevets

(11) Veröffentlichungsnummer: **0 229 612**

**A2**

# (12) EUROPÄISCHE PATENTANMELDUNG

(21) Anmeldenummer: 87100032.9

(22) Anmeldetag: 03.01.87

(51) Int. Cl.³: **B 60 N 1/00**
**B 60 N 3/06**

(30) Priorität: 15.01.86 DE 8600819 U

(43) Veröffentlichungstag der Anmeldung:
22.07.87 Patentblatt 87/30

(84) Benannte Vertragsstaaten:
DE ES FR GB IT

(71) Anmelder: Ignaz Vogel GmbH & Co KG, Fahrzeugsitze
Kleinsteinbacher Strasse 42-44
D-7500 Karlsruhe 41-Stu(DE)

(72) Erfinder: Vogel, Ignaz, Dipl.-Ing.
Kleinsteinbacher Strasse 44
D-7500 Karlsruhe 41-Stu(DE)

(74) Vertreter: Trappenberg, Hans
Wendtstrasse 1
D-7500 Karlsruhe 21(DE)

(54) Fahrgastsitz.

㉝ Bei Ruhesesseln ist es bekannt, eine an die Sitzfläche anschließende Beinauflage vorzusehen. Bei Fahrgastsitzen wurden derartige Beinauflagen bisher abgelehnt, da sie zuviel Platz beanspruchten und das Gewicht der Fahrgastsitze zu stark erhöhten.

Nach der Erfindung gelingt es, diese Mängel dadurch zu beheben, daß innerhalb eines in Längsführungen unterhalb des Sitzuntergestells geführten Schieberahmens eine Beinauflageplatte verschwenkbar angebracht ist.

Fig. 2

04.12.1986 n44
VW 1280

Ignaz Vogel GmbH & Co. KG, Fahrzeugsitze
Kleinsteinbacher Str. 42 - 44, 7500 Karlsruhe 41-Stu.

Fahrgastsitz

Die Erfindung betrifft einen Fahrgastsitz für Personenbeförderungsfahrzeuge, bestehend aus einem auf einem Sitzuntergestell aufgebauten Sitzteil, an dem ein Rückenteil verschwenkbar angelenkt ist.

Insbesondere bei Reisebussen sind die Beförderungsunternehmer bestrebt, ihren Fahrgästen immer mehr Reisekomfort
zu bieten. Dies entspringt nicht nur einem Wettbewerbsdenken, sondern der einfachen Notwendigkeit, daß die Fahrgäste so zu befördern sind, daß sie ohne größere Strapazen
den Ankunftsort auch über die, heutzutage nahezu alltäglichen, großen Entfernungen erreichen. So gehört eine verschwenkbare Rückenlehne bei derartigen Reisebussen oder
gleichgearteten Land-, See- und Luftfahrzeugen bereits zum
Standard. Kann der Pasagier bei zurückgeschwenkter Rückenlehne auch eine angenehme, entspannte Lage einnehmen, da

-2-

der Winkel zwischen der Sitzfläche und der Rückenfläche
vergrößert wird, so bleibt doch der Winkel der Sitzfläche
relativ zur Grundfläche des Fahrzeugs und damit auch der
Winkel zwischen Ober- und Unterschenkel unverändert. Die
Folge ist, daß das Blut in die Füße absackt, was mit einem
Unbehaglichkeitsgefühl verbunden ist. Um dieses unbehagliche Gefühl zu vermeiden, ist es bei Ruhemöbeln, insbesondere Ruhesesseln, bereits bekannt, eine, an die Sitzfläche
anschließende Beinauflage vorzusehen, wodurch der Winkel
zwischen Ober- und Unterschenkel ohne Anspannung der
Muskeln vergrößert und damit eine bessere Durchblutung der
unteren Gliedmaßen erreicht werden kann. Bei Fahrgastsitzen
wurden derartige Beinauflagen jedoch noch nicht vorgesehen,
insbesondere deshalb, weil sie die Herstellung der Fahrgastsitze sehr verteuern und auch das Gewicht dieser Sitze
deutlich erhöhen würden.

Die Erfindung zeigt einen Weg, wie solche Beinauflagen
serienmäßig an Fahrgastsitzen angebracht werden können, so,
daß die Fahrgastsitze trotzdem wirtschaftlich herzustellen
und zu vertreiben sind und auch nicht durch diese Zusatzkonstruktion zu schwer werden. Erreicht wird dies in neuerunggemäßer Weise dadurch, daß unterhalb des Sitzteils, am
Sitzuntergestell, ein in Längsführungen geführter, nach
vorne herausziehbarer Schieberahmen angeordnet und in dem
Schieberahmen eine Beinauflageplatte verschwenkbar angebracht ist.

Nicht also wie bei den bekannten Ruhemöbeln wird die Beinauflage stabil am Sitzteil angelenkt und mit einer Unterkonstruktion versehen, die das Einstellen der Beinauflage
in verschiedenen Winkellagen ermöglicht, sondern es wird
lediglich eine Beinauflageplatte unterhalb des Sitzteils in
einem Schieberahmen untergebracht, die, in Arbeitsstellung
gebracht, im Schieberahmen verschwenkbar ist, sich aber
damit der natürlichen vom Passagier einzunehmenden Winkellage der Beine anpaßt. Selbstverständlich kann auch ohne Schwierigkeiten eine Klemmvorrichtung zum Festklemmen der Winkellage der Beinauflageplatte vorgesehen werden. Hervorzuheben ist, daß die Konstruktion nicht nur äußerst einfach, sondern auch leicht ist, und daß sie im ungenutzten Zustand vollkommen unter dem Sitzteil verschwindet. Es können somit Fahrgastsitze der beschriebenen Art auf wirtschaftliche Art und Weise mit derartigen, den Komfort solcher Fahrgastsitze außerordentlich erhöhenden Beinauflagen versehen werden.

Auf der Zeichnung sind Ausführungsbeispiele des Erfindungsgegenstandes schematisch dargestellt, und zwar zeigen:

Fig. 1   die Konstruktion in eingeschobenem Zustand,

Fig. 2   die Konstruktion im Gebrauchszustand und

Fig. 3   den, die Beinauflageplatte aufnehmenden Schieberahmen.

Auf einem Sitzuntergestell 1, 2 ist eine Längsführung 3 (ein Längsführungspaar) angebracht, die einen Schieberahmen 4 längsverschiebbar führt. Die Längsführungen 3 bestehen aus geschlitzten Schienen, in die vom Schieberahmen 4 seitlich abstehende Führungsleisten 5 eingreifen. Im Schieberahmen 4 ist verschwenkbar eine Beinauflageplatte 6 untergebracht. Die Beinauflageplatte 6 weist seitliche Schlitze 7 auf, in die Bolzen 8, die an verlängerten seitlichen Rahmenteilen 9 des Schieberahmens 4 angebracht sind, eingreifen. An der Vorderseite der Beinauflageplatte 6 schließlich ist noch ein Handgriff 10 zum leichten Ergreifen dieser Beinauflageplatte 6 vorgesehen.

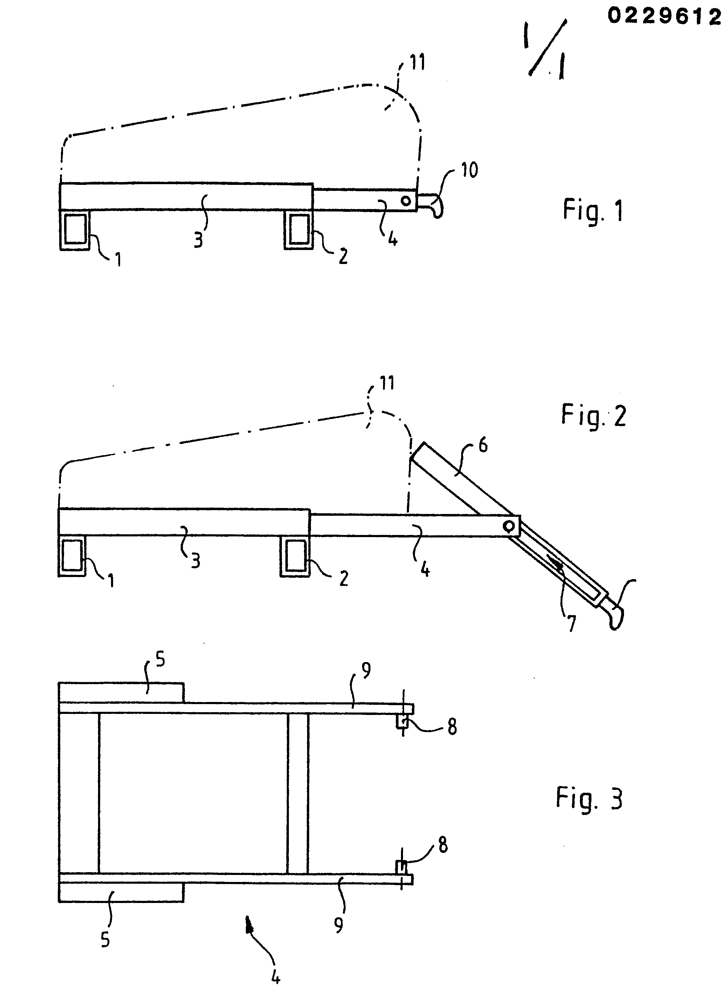

Im eingeschobenen Zustand schaut über die Silhouette des Sitzteils 11 lediglich der Handgriff 10 hinaus (Fig. 1). Der Schieberahmen 4 ist in der Längsführung 3 (im Längsführungspaar) ganz nach hinten verschoben, ebenso wie die Beinauflageplate 6. Nach Herausziehen der Beinauflage-

0229612

platte 6 durch Ziehen am Handgriff 10, wodurch gleichzeitig
der Schieberahmen 4 in seine vordere Stellung gezogen wird
(Fig. 2), kann die Beinauflageplatte 6 benutzt werden,
wobei sich der Winkel dieser Beinauflageplatte dem natürlich einzunehmenden Winkel zwischen Ober- und Unterschenkel
anpaßt. Sollte ein steilerer Winkel zwischen Ober- und
Unterschenkel gewünscht sein, so kann dies unschwer durch
Zurückschieben des Schieberahmens 4 erreicht werden.

Zu erwähnen ist, daß die gesamte Konstruktion außerordentlich leicht ist, wozu noch beitragen kann, daß die Beinauflageplatte 6 aus Kunststoff herzustellen ist.

04.12.1986 n44
VW 1280

Ignaz Vogel GmbH & Co. KG, Fahrzeugsitze
Kleinsteinbacher Str. 42 - 44, 7500 Karlsruhe 41-Stu.

P A T E N T A N S P R Ü C H E

1. Fahrgastsitz für Personenbeförderungsfahrzeuge, bestehend aus einem auf einem Sitzuntergestell aufgebauten Sitzteil, an dem ein Rückenteil verschwenkbar angelenkt ist,
dadurch gekennzeichnet,
daß unterhalb des Sitzteils (11) am Sitzuntergestell (1, 2)
ein in Längsführungen (3) geführter, nach vorne herausziehbarer Schieberahmen (4) angeordnet und in dem Schieberahmen (4) eine Beinauflageplatte (6) verschwenkbar angebracht
ist.

2. Fahrgastsitz nach Anspruch 1,
dadurch gekennzeichnet,
daß die Beinauflageplatte (6) in dem Schieberahmen (4)
längsverschiebbar (Schlitz 7) und verschwenkbar geführt
ist.

-2-

3. Fahrgastsitz nach Anspruch 1,

dadurch gekennzeichnet,

daß die Längsführungen (3) geschlitzte Schienen sind, in die vom Schieberahmen (4) seitlich abstehende Führungsleisten (5) eingreifen.

4. Fahrgastsitz nach Anspruch 1,

dadurch gekennzeichnet,

daß die seitlichen Rahmenteile (9) des Schieberahmens (4) nach vorne verlängert sind und jeweils mit vorderseitig angebrachten Bolzen (8) seitlich in je einen in der Beinauflageplatte (6) angebrachten Längsschlitz (7) eingreifen.

5. Fahrgastsitz nach einem oder mehreren

der vorhergehenden Ansprüche,

dadurch gekennzeichnet,

daß die Beinauflageplatte aus Kunststoff ist.

0229612

1/1

Fig. 1

Fig. 2

Fig. 3